# EUROPÄISCHE PATENTSCHRIFT

(11) **EP 1 225 140 B1**
(45) Veröffentlichungstag und Bekanntmachung des Hinweises auf die Patenterteilung: **18.01.2006**
(21) Anmeldenummer: 01126120.3
(22) Anmeldetag: 03.11.2001
(51) Int. Cl.: B65G 59/06

(54) **Packguttransportsystem**
Packaging goods transport system
Système de transport des articles d'emballage

(30) Priorität: 20.01.2001 DE 10102590
(43) Veröffentlichungstag der Anmeldung: 24.07.2002
(73) Patentinhaber: UHLMANN PAC-SYSTEME GmbH & Co. KG, 88471 Laupheim (DE)
(72) Erfinder: Fochler, Fritz, D 89250 Senden (DE); Krüger, Andreas, D 89155 Donaurieden (DE); Rodi, Wolfgang, D 88471 Laupheim (DE)
(74) Vertreter: Hentrich, Swen

(56) Entgegenhaltungen:
- DE-B- 1 198 284
- GB-A- 1 330 300

## Beschreibung

Die Erfindung betrifft ein Packguttransportsystem zum Überführen von Packungen oder Packungsstapel aus einem die Packungen übereinander gestapelt enthaltenden Abgabeschacht in Aufnahmen eines Förderers, insbesondere eines Produktförderers einer Kartoniermaschine, der die Aufnahmen begrenzende, mit einem Band endlos umlaufende Mitnehmer aufweist, wobei zwischen dem Abgabeschacht und dem Förderer eine Ablagefläche für die Packungen oder Packungsstapel angeordnet ist.

Derartige aus der Praxis bekannte Packguttransportsysteme sind nicht nur dafür vorgesehen, Packungen fest vorgegebener Außenabmessungen zu verarbeiten, vielmehr entspricht es den Anforderungen der Verpackungsindustrie, daß Packungen variabler Größe aus dem Abgabeschacht auf den Förderer abgelegt werden können, wobei weiterhin auch die Höhe des Packungsstapel veränderlich ist, der im Grenzfall nur aus einer einzelnen Packung besteht, aber auch eine Vielzahl übereinander angeordneter Packungen aufweisen kann, so daß die Höhe des Packungsstapel stark variabel ist. Um die Fallhöhe der Packungsstapel bei der Abgabe aus dem Abgabeschacht auf den Förderer zu begrenzen und die mit großen Fallhöhen verbundenen Probleme zu mildern, ist es bekannt, die zur Stapelbildung vorgesehenen Abstapelräder in ihrer Höhenlage gegenüber dem Förderer zu verstellen. An der GB-A-1 330 300 ist ein Packguttransportsystem der eingangs genannten Art bekannt, bei dem die Ablagefläche parallel zum Förderer verläuft, um die Übergabe des Packgutes aus drei nebeneinander angeordneten Abgabeschächte unter Konstanten Bedingungen zu ermöglichen.

Die auf dem Förderer angeordneten Aufnahmen sind in der Regel durch in Förderrichtung voranlaufende Mitnehmer und den Packungsstapel schiebende Mitnehmer begrenzt. Zum formschlüssigen Transport der Packungsstapel müssen bei einem Formatwechsel die Mitnehmer verstellt oder ausgetauscht werden, was auch bei einer Änderung der Stapelhöhe der Packungsstapel erforderlich ist.

Der Erfindung liegt die Aufgabe zugrunde, ein Packguttransportsystem der eingangs genannten Art so auszubilden, daß es auf einfache Weise möglich ist, Packungen verschiedenen Formates und Packungsstapel unterschiedlicher Höhen zu verarbeiten.

Diese Aufgabe wird bei einem Packguttsystem der eingangs genannten Art dadurch gelöst, daß zur Änderung der Fallhöhe der Packungen oder Packungsstapel die Auflagefläche um eine dem dem Abgabeschacht abgewandten Ende der Auflagefläche zugeordnete Achse schwenkbar gelagert ist.

Diese Gestaltung bietet den Vorteil, daß bei Änderungen der Stapelhöhe an dem Abgabeschacht selber keine Anpassungen erforderlich sind, da lediglich zur Anpassung an die Stapelhöhe die Auflagefläche um ihre Achse verschwenkt werden muß, also bei kleinen Stapelhöhen die Auflagefläche näher an den Abgabeschacht herangeschwenkt werden kann, während für große Stapelhöhen ein Absenken der Auflagefläche erfolgt. Ein Austausch der Mitnehmer ist nicht erforderlich, da diese aufgrund der Schwenkstellung der Auflagefläche am Abgabeschacht nur entsprechend der Höhe des Packungsstapels über die Auflagefläche hinausragen und erst bei dem fortschreitenden Transport in Förderrichtung sich ihre Erstreckung über die Auflagefläche vergrößert.

Damit die Mitnehmer bei dem auf dem Förderer transportierten Packungsstapel mittig zur Anlage gebracht werden können, ist im Rahmen der Erfindung weiterhin vorgesehen, daß die Auflagefläche eine parallel zur Laufrichtung der Mitnehmer verlaufende, den Durchtritt der Mitnehmer ermöglichende Öffnung aufweist. Diese Öffnung vermeidet, daß mit konstruktiv höherem Aufwand die Mitnehmer seitlich die Auflagefläche umgreifen müssen, um die zwischen dem Förderer und den Packungen befindliche Auflagefläche zu umgehen.

Nach einer besonderes bevorzugten Auführungsform der Erfindung ist weiterhin vorgesehen, daß der Förderer zur Horizontalen geneigt verläuft mit dem am Anfang der Steigung liegenden Abgabeschacht. Diese Ausführungsform bietet den Vorteil, daß bei gleicher Förderlänge die Baulänge des Packguttransportsystems verkürzt werden kann. Weiterhin ergibt sich dadurch auch die Möglichkeit, daß die in Förderrichtung am rückwärtigen Ende der Aufnahme befindlichen Mitnehmer eine Stütze der Packungen oder der Packungsstapel gegen die Hangabtriebskraft bilden, und daß die Mitnehmer eine gegenseitigen Abstand von mehr als die in Förderrichtung größtmögliche Packungsabmessung aufweisen, wodurch es wiederum im Sinne einer möglichst einfachen Formatanpassung möglich ist, ohne den Austausch von Formatteilen Packungen von praktisch beliebiger Packungsgröße aus dem Abgabeschacht auf den Förderer zu übergeben, da der Abstand der Mitnehmer und damit die Größe der Aufnahmen so gewählt ist, daß auch die größten Packungen darin plaziert werden können, wobei eine Führung durch in Förderrichtung vorne liegende Mitnehmer zur Bewahrung der Integrität der Packungsstapel nicht erforderlich ist, da der bei horizontalen Förderer dazu vorgesehene Formschluß durch die Wirkung der Handabtriebskraft ersetzt ist.

Damit die Packungen in dem Packungsstapel bei der Abgabe aus dem Abgabeschacht allseitig geführt werden und ihre gegenseitige Ausrichtung nicht verlieren, weist der Abgabeschacht zur Führung der Packungen oder Packungsstapel bei der Übergabe aus dem Abgabeschacht auf der Ablagefläche abgestützte Teleskopschienen auf. Weiterhin weist der Abgabeschacht eine mit den Teleskopschienen verstellbare und gesteuert verschließbare Halteklappe auf, die nach dem Ablegen des Packungsstapels auf dem Förderer den Packungsstapel gegen Abtransport sichert, bis der schiebende Mitnehmer zur Anlage gebracht worden ist, woraufhin dann die Halteklappe zeitpunktgesteuert öffnet und sich nach dem Entfernen des Packungsstapel durch den Mitnehmer aus dem Abgabeschacht wieder schließt.

Eine hinsichtlich der Einfachheit ihres Aufbaus bevorzugte Ausführungsform, die für die meisten Anwendungsfälle ausreichend ist, ist dadurch gekennzeichnet, daß die Auflagefläche durch eine Platte gebildet ist.

Alternativ ist es aber gleichfalls möglich, daß die Auflagefläche durch ein um zwei Umlenkrollen endlos umlaufendes Transportband gebildet ist. Dieses Transportband ermöglicht auch auf einfache Weise die Beförderung von runden Verpackungen, insbesondere Flaschen, die dem schiebenden Mitnehmer anliegen und bei denen ein Abrollen auf dem Förderer, das Beschädigungen der Flaschen, deren Etiketten oder Verschlüsse verursachen kann, dadurch vermieden ist, daß das Transportband selber umläuft, also keine Relativbewegung der Flaschen gegenüber dem Transportband bei der Förderung durch die Mitnehmer des Förderers erfolgt.

Als günstig hat sich dabei erwiesen, wenn das Transportband mehrfach vorgesehen ist und die Transportbänder zur Realisierung der Öffnung einen gegenseitigen Abstand voneinander einhalten.

Das Packguttransportsystem wird in der Regel dazu genutzt, um die Packungsstapel einer Kartoniermaschine zuführen zu können, durch die die Packungsstapel in mit der Kartoniermaschine herantransportierte Kartons eingeschoben werden können. Damit diese Einschubbewegung durch die Mitnehmer selber nicht bewirkt werden muß und die Mitnehmer diese Einschubbewegung auch nicht stören, ist es vorteilhaft, wenn die Mitnehmer am in Förderrichtung vorne liegenden Endes des oberen Trums gesteuert durch in eine Kurvenbahn eingreifende Rollen gegen die Förderrichtung in die Öffnung verschwenkbar sind. Günstig ist weiterhin, wenn sich in Förderrichtung an das obere Ende der Auflagefläche eine horizontal ausgerichtete Lagerplatte anschließt, auf der die mit den Mitnehmern herangeförderten Packungsstapel abgestellt werden können und dort zur weiteren Verarbeitung bereitstehen.

Eine definierte Position der Packungsstapel wird dabei dadurch erreicht, daß am in Förderrichtung hinteren Ende der Lagerplatte eine vertikal stehende Anschlagplatte für die Packungen oder Packungsstapel angeordnet ist.

Im folgenden wird die Erfindung an einem in der Zeichnung dargestellten Ausführungsbeispiel näher erläutert; es zeigen:
- Fig. 1: eine schematische, perspektivische Darstellung des erfindungsgemäßen Packguttransportsystems,
- Fig. 2: eine Seitenansicht des Details II aus Fig. 1 in der der minimalen Stapelhöhe entsprechenden Stellung der Auflageplatte,
- Fig. 3: eine der Fig. 2 entsprechende Darstellung in der der maximalen Stapelhöhe entsprechenden Stellung der Auflagefläche,
- Fig. 4: eine schematische Darstellung des Förderers in einer Seitenansicht ohne Verkleidung, mit den über Rollen in eine Kurvenbahn eingreifenden Mitnehmern,
- Fig. 5: eine perspektivische, schematische Darstellung des mit einer Kartoniermaschine gekoppelten Packguttransportsystems, und
- Fig. 6: eine der Fig. 5 entsprechende Darstellung des für den Transport von Flaschen ausgelegten Packguttransportsystems.

Das in der Zeichnung dargestellte Packguttransportsystem 1 dient zum Überführen von Packungen 2 oder von Packungsstapels 3 aus einem die Packungen 2 übereinander gestapelt enthaltenen Abgabeschacht 4 in Aufnahmen 5 eines Förderers 6, durch den die Packungsstapel 3 einer Kartoniermaschine 7 zugeführt werden. Der Förderer 6 verläuft in Förderrichtung schräg aufwärts, ist also geneigt zur Horizontalen orientiert, wobei der Abgabeschacht 4 am Anfang der Steigung liegt. Die in Förderrichtung am rückwärtigen Ende der Aufnahme 5 befindlichen Mitnehmer 8 bilden eine Stütze der Packungsstapel 3 gegen die Hangabtriebskraft, die eine definierte Anlage der Packungen 2 eben an diesem rückwärtigen, schiebenden Mitnehmer 8 bewirkt. Eine Führung der Packungsstapel 3 am in Förderrichtung vorderen Ende ist dadurch nicht erforderlich, so daß die Mitnehmer 8 einen gegenseitigen Abstand von mehr als die in Förderrichtung größtmögliche Packungsabmessung aufweisen und so ohne Formatanpassung Packungen 2 beliebiger Abmessungen mit dem Förderer 6 transportiert werden können.

Um den Austausch von Formatteilen zu vermeiden, wenn sich die Höhe des Packungsstapels 3 ändert, ist zwischen dem Abgabeschacht 4 und dem Förderer 6 eine Auflagefläche 9 für die Packungsstapel 3 angeordnet, die um eine dem dem Abgabeschacht 4 abgewandten Ende der Auflagefläche 9 zugeordnete Achse schwenkbar gelagert ist, so daß im Ergebnis die Fallhöhe der Packungsstapel 3 durch Schwenken dieser Auflagefläche 9 auf das tolerierbare Maß begrenzt wird. Um trotz der zwischen dem Förderer 6 und dem Abgabeschacht 4 angeordneten Auflagefläche 9 den Transport der Packungsstapel 3 mittels der Mitnehmer 8 gewährleisten zu können, weist die Auflagefläche 9 eine parallel zur Laufrichtung der Mitnehmer 8 verlaufende, den Durchtritt der Mitnehmer 8 ermöglichende Öffnung 10 auf.

Damit die Packungsstapel 3 nach ihrer durch Stapelräder bewirkten Stapelbildung während des gesamten Falls bei der Überführung auf die Auflagefläche 9 und bis zur Beruhigung nach dem Aufprall allseitig geführt werden, weist der Abgabeschacht 4 auf der Ablagefläche 9 abgestützte Teleskopschienen 11 auf, die jeder Schwenkbewegung der Auflagefläche 9 folgen. Zusätzlich ist dem Abgabeschacht 4 eine mit den Teleskopschienen 11 verstellbare Halteklappe zugeordnet, die zeitpunktgesteuert geöffnet werden kann, um die auf die Auflagefläche 9 übergebenen Packungsstapel 3 mit den Mitnehmern 8 abtransportieren zu können.

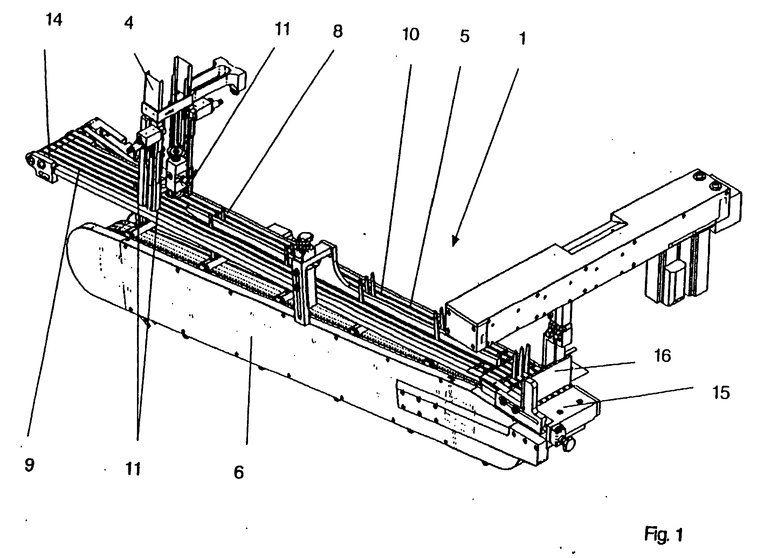

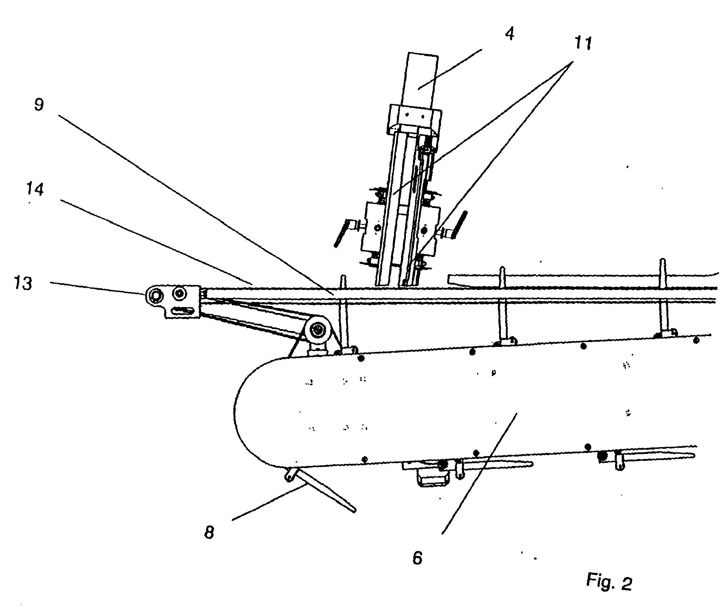

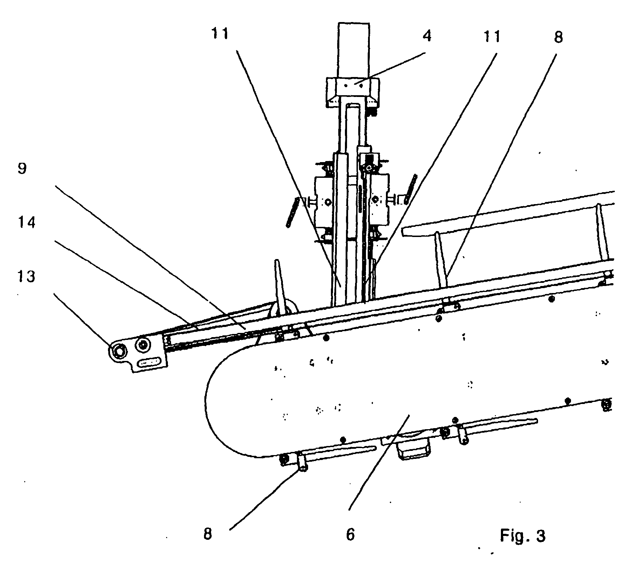

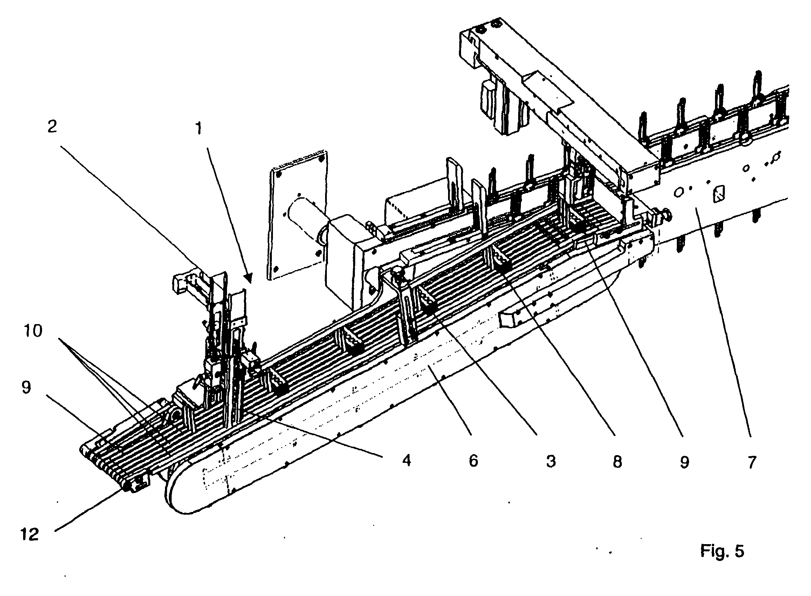

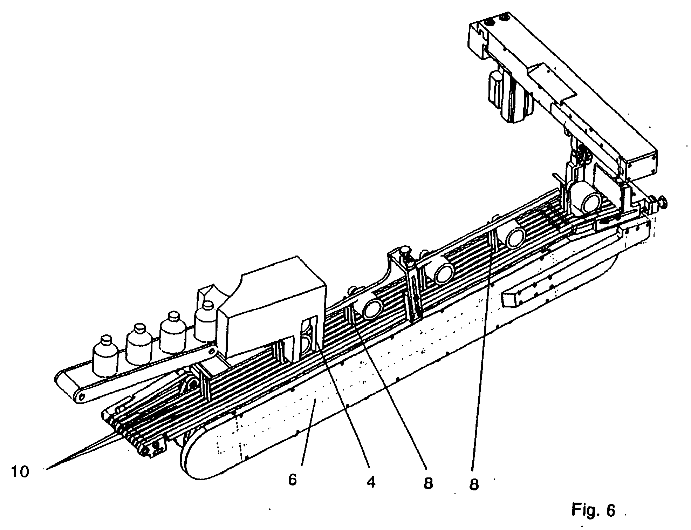

In der einfachsten Ausführungsform (Fig. 5) ist die Auflagefläche 9 durch eine Platte 12 gebildet, auf der die Packungsstapel 3 bei ihrem Transport durch die Mitnehmer 8 entlang gleiten. Es ist aber gleichfalls möglich, daß die Auflagefläche 9 durch eine um zwei Umlenkrollen 13 endlos umlaufendes Transportband 14 gebildet ist (Fig. 1 bis 3, Fig. 6), wobei das Transportband 14 mehrfach vorgesehen ist und die Transportbänder 14 zur Realisierung der Öffnung 10 einen gegenseitigen Abstand voneinander einhalten, um den Durchtritt der Mitnehmer 8 zu ermöglichen.

Wie insbesondere aus Fig. 1 ersichtlich ist, ragen die Mitnehmer 8 am unteren Ende des oberen Trums des Förderers 6 nur entsprechend der Höhe des Packungsstapel 3 durch die Transportbänder 14 hindurch, tauchen aber bei der fortschreitenden Bewegung in Förderrichtung verstärkt auf. Diese Bewegung kann auch dazu genutzt werden, um beispielsweise Beilagzettel aus einem Vorratsstapel abzustreifen und mit dem Packungsstapel 3 der Kartoniermaschine 7 zur Verfügung zu stellen.

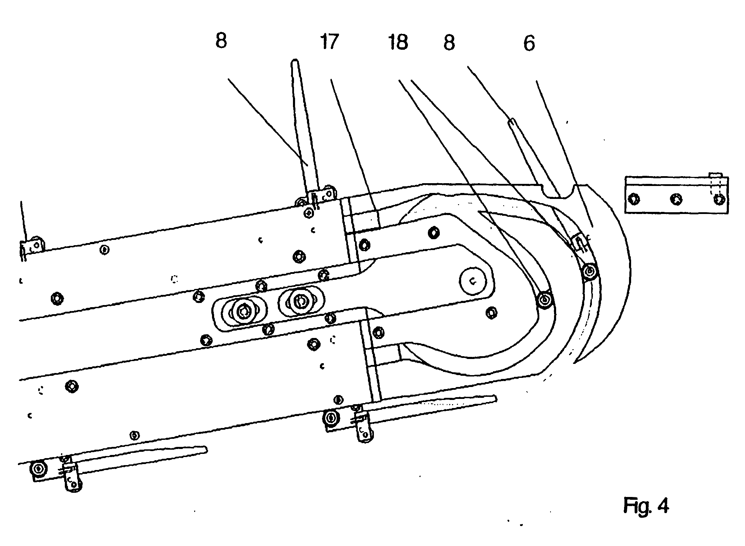

Aus Fig. 1 ist ersichtlich, daß sich in Förderrichtung an das obere Ende der Auflagefläche 9 eine horizontal ausgerichtete Lagerplatte 15 anschließt, auf der eine vertikal stehende Anschlagplatte 16 für die Packungen 2 oder Packungsstapel 3 angeordnet ist, die dort eine definierte Position für die Weiterverarbeitung mit der Kartoniermaschine 7 erhalten. Damit die Mitnehmer 8 und die Lagerplatte 15 sich nicht gegenseitig behindern, sind die Mitnehmer 8 am in Förderrichtung vorne liegenden Ende des oberen Trums gesteuert durch in eine Kurvenbahn 17 eingreifende Rollen 18 gegen die Förderrichtung in die Öffnung 10 verschwenkbar, tauchen also bei ihrem Umlauf unter dem Packungsstapel 3 und der Lagerplatte 15 auf dem Weg zum unteren Trum weg. In Fig. 4 ist beim unteren Trum das Aufrichten eines der Mitnehmer 8 dargestellt.

## Patentansprüche

1. Packguttransportsystem zum Überführen von Packungen (2) oder Packungsstapel (3) aus einem die Packungen (2) übereinander gestapelt enthaltenden Abgabeschacht (4) in Aufnahmen (5) eines Förderers (6), insbesondere eines Produktförderers einer Kartoniermaschine (7), der die Aufnahmen (5) begrenzende, mit einem Band endlos umlaufende Mitnehmer (8) aufweist, wobei zwischen dem Abgabeschacht (4) und dem Förderer (6) eine Auflagefläche (9) für die Packungen (2) oder die Packungsstapel (3) angeordnet ist, **dadurch gekennzeichnet, daß** zur Änderung der Fallhöhe der Packungen (2) oder Packungsstapel (3) die Auflagefläche (9) um eine dem dem Abgabeschacht (4) abgewandten Ende der Auflagefläche (9) zugeordnete Achse schwenkbar gelagert ist.

2. Packguttransportsystem nach Anspruch 1, **dadurch gekennzeichnet, daß** die Auflagefläche (9) eine parallel zur Laufrichtung der Mitnehmer (8) verlaufende, den Durchtritt der Mitnehmer (8) ermöglichende Öffnung (10) aufweist.

3. Packguttransportsystem nach Anspruch 1 oder 2, **dadurch gekennzeichnet, daß** der Förderer (6) zur Horizontalen geneigt verläuft mit dem am Anfang der Steigung liegenden Abgabeschacht (4).

4. Packguttransportsystem nach Anspruch 3, **dadurch gekennzeichnet, daß** die in Förderrichtung am rückwärtigen Ende der Aufnahme (5) befindlichen Mitnehmer (8) eine Stütze der Packungen (2) oder der Packungsstapel (3) gegen die Hangabtriebskraft bilden, und daß die Mitnehmer (8) einen gegenseitigen Abstand von mehr als die in Förderrichtung größtmögliche Packungsabmessung aufweisen.

5. Packguttransportsystem nach einem der Ansprüche 1 bis 4, **dadurch gekennzeichnet, daß** der Abgabeschacht (4) zur Führung der Packungen (2) oder Packungsstapel (3) bei der Übergabe aus dem Abgabeschacht (4) auf der Auflagefläche (9) abgestützte Teleskopschienen (11) aufweist.

6. Packgutransportsystem nach einem der Ansprüche 1 bis 5, **dadurch gekennzeichnet, daß** der Abgabeschacht (4) eine mit den Teleskopschienen (11) verstellbare und gesteuert verschließbare Halteklappe aufweist.

7. Packguttransportsystem nach einem der Ansprüche 1 bis 6, **dadurch gekennzeichnet, daß** die Auflagefläche (9) durch eine Platte (12) gebildet ist.

8. Packguttransportsystem nach einem der Ansprüche 1 bis 6, **dadurch gekennzeichnet, daß** die Auflagefläche (9) durch ein um zwei Umlenkrollen (13) endlos umlaufendes Transportband (14) gebildet ist.

9. Packguttransportsystem nach Anspruch 8, **dadurch gekennzeichnet, daß** das Transportband (14) mehrfach vorgesehen ist und die Transportbänder (14) zur Realisierung der Öffnung (10) einen gegenseitigen Abstand voneinander einhalten.

10. Packguttransportsystem nach einem der Ansprüche 2 bis 9, **dadurch gekennzeichnet, daß** die Mitnehmer (8) am in Förderrichtung vorne liegenden Ende des oberen Trums gesteuert durch in eine Kurvenbahn (17) eingreifende Rollen (18) gegen die Förderrichtung in die Öffnung verschwenkbar sind.

11. Packgutransportsystem nach Anspruch 10, **dadurch gekennzeichnet, daß** sich in Förderrichtung an das obere Ende der Auflagefläche (9) eine horizontal ausgerichtete Lagerplatte (15) anschließt.

12. Packguttransportsystem nach Anspruch 11, **dadurch gekennzeichnet, daß** am in Förderrichtung hinteren Ende der Lagerplatte (15) eine vertikal stehende Anschlagplatte (16) für die Packungen (2) oder Packungsstapel (3) angeordnet ist.

## Claims

1. Packaged goods transport system for transferring packages (2) or package stacks (3) from a delivery chute (4) containing the packages (2) stacked one on top of the other into grooves (5) of a conveyor (6), in particular a product conveyor of a cartoning machine (7), which has drive carriers (8) delimiting the grooves (5) circulating continuously with a belt, a carrier track (9) for the packages (2) or the package stacks (3) being arranged between the delivery chute (4) and the conveyor (6), **characterized in that** the carrier track (9) is housed pivotable about an axis at the end of the carrier track (9) facing away from the delivery chute (4) to change the drop height of the packages (2) or package stacks (3).

2. Packaged goods transport system according to claim 1, **characterized in that** the carrier track (9) has an opening (10), running parallel to the direction of travel of the drive carriers (8), which allows the drive carriers (8) to pass through.

3. Packaged goods transport system according to claim 1 or 2, **characterized in that** the conveyor (6) runs inclined to the horizontal with the delivery chute (4) lying at the start of the slope.

4. Packaged goods transport system according to claim 3, **characterized in that** the drive carriers (8) located at the rear end, in conveyance direction, of the groove (5) stay the packages (2) or the package stacks (3) against the downhill-slope force and **in that** the drive carriers (8) are separated by more than the largest possible package dimension in conveyance direction.

5. Packaged goods transport system according to one of claims 1 to 4, **characterized in that** the delivery chute (4) has telescopic bars (11) resting on the carrier track (9) with which to guide the packages (2) or package stacks (3) during transfer from the delivery chute (4).

6. Packaged goods transport system according to one of claims 1 to 5, **characterized in that** the delivery chute (4) has a retaining flap, adjustable with the telescopic bars (11) and lockable in controlled manner.

7. Packaged goods transport system according to one of claims 1 to 6, **characterized in that** the carrier track (9) is formed by a sheet (12).

8. Packaged goods transport system according to one of claims 1 to 6, **characterized in that** the carrier track (9) is formed by a conveyor belt (14) circulating continuously about two guide rollers (13).

9. Packaged goods transport system according to claim 8, **characterized in that** several conveyor belts (14) are provided and the conveyor belts (14) maintain a reciprocal distance from one another to create the opening (10).

10. Packaged goods transport system according to one of claims 2 to 9, **characterized in that** the drive carriers (8) at the end lying in front, in conveyance direction, of the upper strip can be pivoted in a controlled manner into the opening (10) by rollers (18) engaging in a cam track (17), against the direction of conveyance.

11. Packaged goods transport system according to claim 10, **characterized in that** in conveyance direction a horizontally aligned bearing sheet (15) adjoins the top end of the carrier track (9).

12. Packaged goods transport system according to claim 11, **characterized in that** a vertical stop sheet (16) for the packages (2) or package stacks (3) is arranged at the rear end, in conveyance direction, of the bearing sheet (15).

## Revendications

1. Système de transport d'articles d'emballage pour transférer des emballages (2) ou des piles d'emballages (3) d'un conduit de distribution (4), contenant les emballages (2) empilés, dans des moyens de réception (5) d'un convoyeur (6), en particulier d'un convoyeur de produits d'une machine d'encartonnage (7), qui présente des éléments d'entraînement (8) délimitant les moyens de réception (5) et circulant sans fin avec une bande, une surface de pose (9) pour les emballages (2) ou les piles d'emballages (3) étant disposée entre le conduit de distribution (4) et le convoyeur (6), **caractérisé en ce que** pour modifier la hauteur de chute des emballages (2) ou des piles d'emballages (3), la surface de pose (9) est montée avec possibilité de pivotement autour d'un axe associé à l'extrémité de la surface de pose (9) éloignée du conduit de distribution (4).

2. Système de transport d'articles d'emballage selon la revendication 1, **caractérisé en ce que** la surface de pose (9) présente une ouverture (10) qui est parallèle à la direction de déplacement des éléments d'entraînement (8) et permet le passage des éléments d'entraînement (8).

3. Système de transport d'articles d'emballage selon la revendication 1 ou 2, **caractérisé en ce que** le convoyeur (6) est incliné par rapport à l'horizontale, le conduit de distribution (4) se trouvant au début de la pente.

4. Système de transport d'articles d'emballage selon la revendication 3, **caractérisé en ce que** les éléments d'entraînement (8) situés à l'extrémité arrière du moyen de réception (5), vu dans le sens du transport, constituent un appui pour les emballages (2) ou les piles d'emballages (3) leur permettant de résister à la force de descente de pente, et **en ce que** les éléments d'entraînement (8) présentent un espacement mutuel supérieur à la plus grande dimension possible des emballages dans la direction de transport.

5. Système de transport d'articles d'emballage selon une des revendications 1 à 4, **caractérisé en ce que** pour guider les emballages (2) ou les piles d'emballages (3) lors du transfert depuis le conduit de distribution (4), le conduit de distribution (4) présente des rails télescopiques (11) qui sont en appui sur la surface de pose (9).

6. Système de transport d'articles d'emballage selon une des revendications 1 à 5, **caractérisé en ce que** le conduit de distribution (4) présente un volet de retenue susceptible d'être déplacé avec les rails télescopiques (11) et d'être fermé de manière contrôlée.

7. Système de transport d'articles d'emballage selon une des revendications 1 à 6, **caractérisé en ce que** la surface de pose (9) est constituée d'une plaque (12).

8. Système de transport d'articles d'emballage selon une des revendications 1 à 6, **caractérisé en ce que** la surface de pose (9) est constituée d'une bande transporteuse (14) circulant sans fin autour de deux poulies de renvoi (13).

9. Système de transport d'articles d'emballage la revendication 8, **caractérisé en ce qu'**il est prévu plusieurs bandes transporteuses (14) et que les bandes transporteuses (14) présentent un espacement mutuel pour réaliser l'ouverture (10).

10. Système de transport d'articles d'emballage selon une des revendications 2 à 9, **caractérisé en ce que** les éléments d'entraînement (8), à l'extrémité avant du brin supérieur, vu dans le sens de transport, peuvent être amenés par pivotement dans l'ouverture, à l'aide de galets (18) s'engageant dans une trajectoire courbe (17).

11. Système de transport d'articles d'emballage selon la revendication 10, **caractérisé en ce que**, vu dans le sens du transport, l'extrémité supérieure de la surface de pose (9) est suivie d'une plaque de support (15) horizontale.

12. Système de transport d'articles d'emballage selon la revendication 11, **caractérisé en ce qu'**une plaque de butée (16) verticale pour les emballages ou les piles d'emballages (3) est disposée à l'extrémité arrière de la plaque de support (15), vu dans le sens du transport.
